# EUROPEAN PATENT SPECIFICATION

(11) **EP 4 136 721 B1**
(45) Date of publication and mention of the grant of the patent: **04.11.2026**
(21) Application number: 21721192.9
(22) Date of filing: 16.04.2021
(51) Int. Cl.: H02G 1/00, H02G 1/14, H02G 15/04, H02G 15/18

(54) **METHOD AND DEVICE FOR POSITIONING COMPONENTS ON A CABLE**
VERFAHREN UND VORRICHTUNG ZUR POSITIONIERUNG VON KOMPONENTEN AUF EINEM KABEL
PROCÉDÉ ET DISPOSITIF DE POSITIONNEMENT DE COMPOSANTS SUR UN CÂBLE

(30) Priority: 16.04.2020 US 202016850061
(43) Date of publication of application: 22.02.2023
(73) Proprietor: TE Connectivity Solutions GmbH, 8200 Schaffhausen (CH)
(72) Inventor: COLLEGE, David Alan, Middletown, Pennsylvania 17057 (US); ONDO, Mark Andrew, Middletown, Pennsylvania 17057 (US)
(74) Representative: Ashton, Gareth Mark
(86) International application number: PCT/IB2021/053156
(87) International publication number: WO 2021/209967

(56) References cited:
- WO-A1-89/00782
- DE-A1- 19 807 840
- US-A- 2 038 840
- US-A- 6 049 960

## Description

The present invention is directed to a method and a device for positioning one or more components on a cable. In particular, the invention is directed to a method and device which facilitates the insertion of components over an end of the cable.

The insertion of components, such as shielding ferrules and seals is often accomplished by hand. Accordingly, the insertion operation involves extremely low productivity. In addition, as the ends of cables often become misshaped, it is often difficult to insert components on the ends of the cables without a good deal of manipulation of the components and the cable to allow the cable to be moved past the misshaped ends. US6049960 discloses an example of a tool for facilitating the placement of sleeve-like components onto a cable.

The problem to be solved is to provide a device and method which increase the productivity of assembly. In addition, there is a need to provide a device and method which reshapes the end of the cable to allow for ease of insertion of the component onto the cable.

This problem is solved by a method of positioning a component on a cable according to claim 1, and a collet mechanism according to claim 9. The method includes: moving a collet comprising resilient legs into position within the component, the collet being in a closed position in which the resilient legs are not expanded; moving a camming tool provided inside an opening of the collet to cause the resilient legs to move to an expanded position in which an outer diameter of a free end of the collet is greater than an inner diameter of the component; engaging the component with the collet; moving the collet with the component positioned thereon into alignment with an end of the cable; securing the collet to the end of the cable; moving the component from the collet to the cable; and removing the collet from the end of the cable.

An embodiment is directed to a collet mechanism for inserting components on a cable. The collet mechanism has an expandable portion with an opening which extends along a longitudinal axis of the collet mechanism. Resilient legs are provided on the expandable portion. The resilient legs have fixed ends and free ends. Slots are provided between the resilient legs. The slots separate the resilient legs to allow each resilient leg to act independently of the other resilient legs. The expandable portion is movable between a closed position, in which the resilient legs have a first outside diameter, and an expanded position, in which the resilient legs have a second outside diameter, the second diameter being greater than the first diameter.

The invention will now be described by way of example with reference to the accompanying drawings in which:
FIG. 1 is a perspective view of an illustrative collet according to the present invention.
FIG. 2 is a cross-sectional view of the collet of FIG. 1 shown in a first or closed position in which resilient collet legs are shown in an unstressed position.
FIG. 3 is a cross-sectional view of the collet of FIG. 1 shown in a second or expanded position in which resilient collet legs are shown in an expanded or stressed position.
FIG. 4 is a diagrammatic view of a cable and representative components with the collet shown prior to engaging a respective component.
FIG. 5 is a diagrammatic view similar to FIG. 4 with the collet shown in engagement with the respective component.
FIG. 6 is a diagrammatic view similar to FIG. 5 with the collet shown in engagement with the respective component and expanded.
FIG. 7 is a diagrammatic view similar to FIG. 6 with the collet shown positioned proximate an end of the cable.
FIG. 8 is a diagrammatic view similar to FIG. 7 with the collet shown in engagement with the end of the cable.
FIG. 9 is a diagrammatic view similar to FIG. 8 with the respective component moved into engagement with the cable.
FIG. 10 is a diagrammatic view similar to FIG. 9 with the collet expanded and removed from the end of the cable.

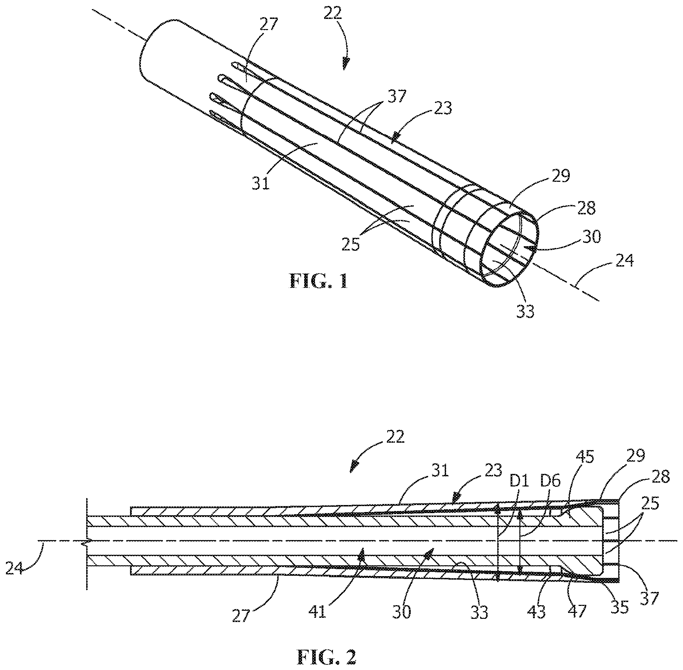

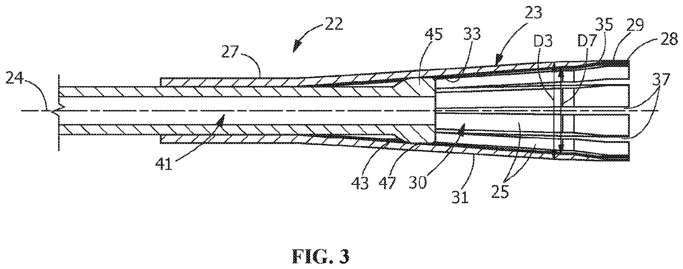

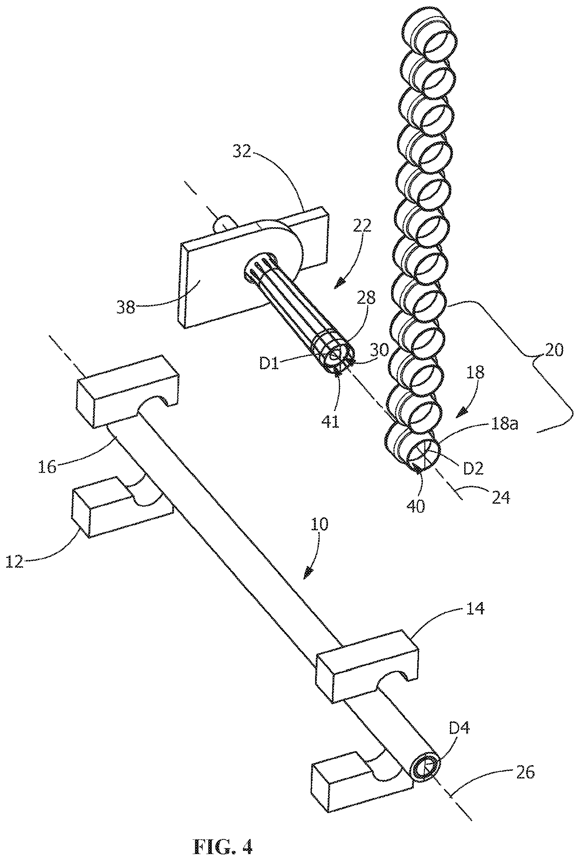

As shown in FIGS. 1 through 3, a collet mechanism 22 for use in positioning components 18 (FIGS 4 through 10) on a cable 10 is shown. The collet mechanism 22 has an expandable portion 23 with a free end 28. The expandable portion 23 has an opening 30 which extends along a longitudinal axis 24 of the collet mechanism 22. The expandable portion 23 is movable between a first or closed position (as shown in FIG. 2) and a second or expanded position (as shown in FIG. 3). Resilient legs 25 are provided on the expandable portion 23. The resilient legs 25 have fixed ends 27 and free ends 29. The free ends 29 are position at the free end 28 of the collet mechanism 22. The resilient legs 25 have outer surfaces 31 which defines the outer surface of the expandable portion 23 and inner surfaces 33 which define the opening 30. The inner surfaces 33 have camming surfaces 35 provide thereon. The camming surfaces 35 are provided between the fixed ends 27 and the free ends 29. Slots or gaps 37 are provided between the resilient legs 25. The slots or gaps 37 extend from the free ends 29 to proximate the fixed ends 27. The slots 37 separate or space the resilient legs 25 to allow each resilient leg 25 to act independently of the other resilient legs 25.

A camming tool 41 is provided in the opening 30 of the collet mechanism 22. The camming tool 41 has an enlarged portion 43 which has camming surfaces 45 provided thereon. The camming surfaces 45 of the enlarged portion 43 are positioned between the camming surfaces 35 of the resilient legs 25 and the free ends 29 of the resilient legs 25 when the expandable portion 23 is in the first position, as shown in FIG. 2. In the first position, the expandable portion 23 has an outside diameter of D1 and an inside diameter D6 of the opening 30.

As the camming tool 41 is moved from the first position to the second position, the camming surfaces 43 of the enlarged portion 45 are initially positioned in engagement with the camming surfaces 35 of the resilient legs 25, causing the free ends 29 of the resilient legs 25 to move outward or expand away from the longitudinal axis 24 of the collet mechanism 22. Continued movement of the camming tool 41 toward the second position causes outside surfaces 47 of the enlarged portion 45 of the camming tool 41 to engage the inner surfaces 33 of the expandable portion 23, causing the free ends 29 of the resilient legs 25 to move further outward or further expand away from the longitudinal axis 24 of the collet mechanism 22 to the second position, as shown in FIG. 3. In the second position, the expandable portion 23 has an outside diameter of D3 and an inside diameter D7 of the opening 30.

As shown diagrammatically in FIG. 4, a wire or cable 10 is positioned between one or more clamps 12, 14. As shown in FIG. 4, the first or front clamp 12 is positioned proximate a free end 16 of the cable 10. The second or rear clamp 14 is spaced from the first clamp 12. Positioned proximate to the cable 10 is one or more components 18. The components 18 may be, but are not limited to, seals, shielding ferrules and/or housing parts. The components 18 shown in FIG. 4 are depicted to be in a loading magazine (not shown). However, the components 18 may be presented in other devices or by other methods. A loading zone 20 of the components 18 is shown to be in horizontal alignment with the positioning of the cable 10. However, the loading zone 20 may be positioned in other locations, including but not limited to, in vertical alignment with the positioning of the cable 10. The collet mechanism 22 is provided in alignment with a respective component 18a which is positioned in the loading zone 20. In the initial or loading position shown in FIG. 4, the longitudinal axis 24 of the collet mechanism 22 extends in a direction which is essentially parallel to the longitudinal axis 26 of the cable 10. However, other orientations of the collet mechanism 22 may be used.

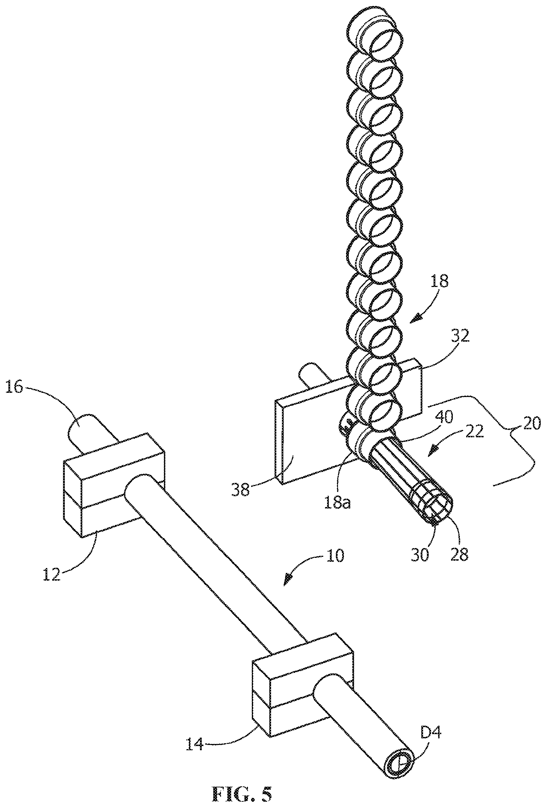

With the cable 10 properly positioned between the clamps 12, 14, the clamps 12, 14 are closed around the cable 10 to retain the cable in position, as shown in FIG. 5. In addition, a front free end 28 of the collet mechanism 22 is moved into an opening 40 of the respective component 18a which is positioned in the loading zone 20. The clamps 12, 14 and the collet mechanism 22 may be driven by various types of drive devices, including, but not limited to, air cylinders which are controlled by a programmed controller. During this movement, the collet mechanism 22 is retained in a first position, in which an outside diameter D1 of the free end 28 of the collet mechanism 22 is less than an inside diameter D2 of the opening 40 of the component 18a. This allows the front end 28 of the collet mechanism 22 to move through the opening 40 of the component 18a with little or no restriction.

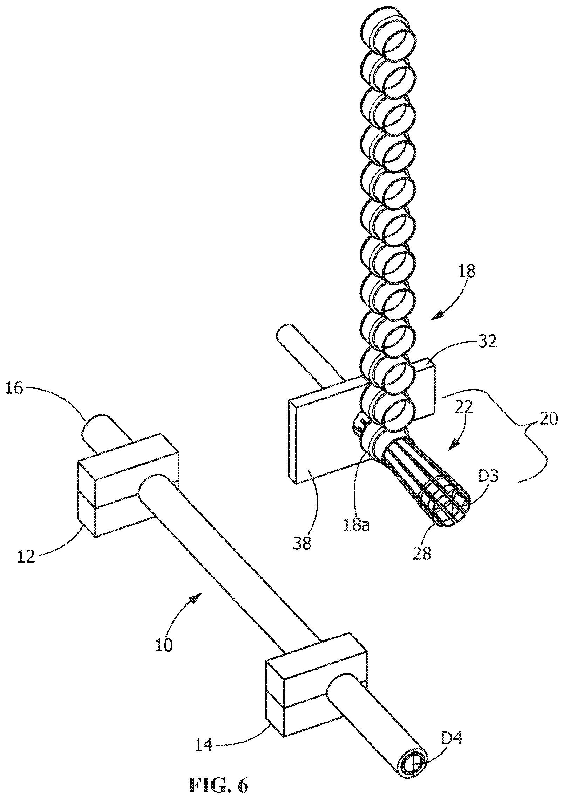

As shown in FIG. 6, with the collet mechanism 22 properly positioned in the opening 40 of the component 18a, the free end 28 of the collet mechanism 22 is resiliently deformed, expanded or flared open to a second position, as previously described, in which the outside diameter D3 of the free end 28 of the collet mechanism 22 is greater than the inside diameter D2 of the opening 40 of the component 18a. With the collet mechanism 22 in the second position, the component 18a is prevented from being moved over the free end 28 of the collet mechanism 22 and is retained on the collet mechanism 22.

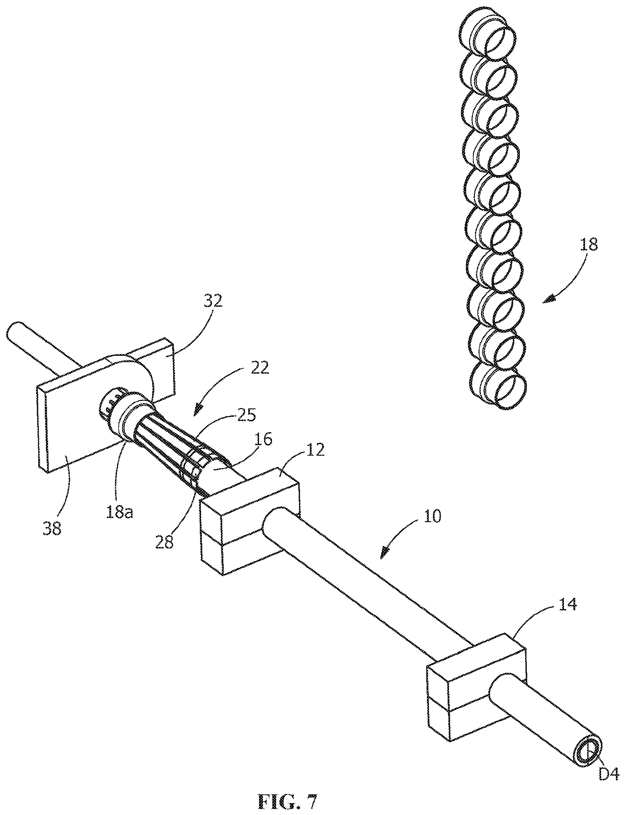

With the component 18a properly retained on the collet mechanism 22, the collet mechanism 22 and component 18a are moved from the loading zone 20 and are moved into alignment with the free end 16 of the cable 10, as shown in FIG. 7. As shown in FIGS. 6 and 7, the collet mechanism 22 is moved horizontally. However, the collet mechanism 22 may be moved in other directions, such as, but not limited to, vertically, depending or the relative positions of the cable 10 and components 18.

The collet mechanism 22 is maintained in the second position as the collet mechanism 22 is moved into alignment with the cable 10. In the second position, an inside diameter D7 (FIG. 3) of the free end 28 of the collet mechanism 22 is greater than an outside diameter D4 of the cable 10. This allows the free end 28 of the collet mechanism 22 to be moved over the free end 16 of the cable 10.

With the free end 28 of the collet mechanism 22 properly positioned over the free end 16 of the cable 10, the free end 28 of the collet mechanism 22 is returned toward the first position. As this occurs, the camming tool 41 is moved from the second position shown in FIG. 3 to the first position shown in FIG. 2. This allows the enlarged portion 45 of the camming tool 41 to again be positioned between the camming surfaces 35 of the resilient legs 25 and the free ends 29 of the resilient legs 25, such that the camming surfaces 43 of the enlarged portion 45 do not engage the inner surfaces 33 of the resilient legs 25 of the expandable portion 23.

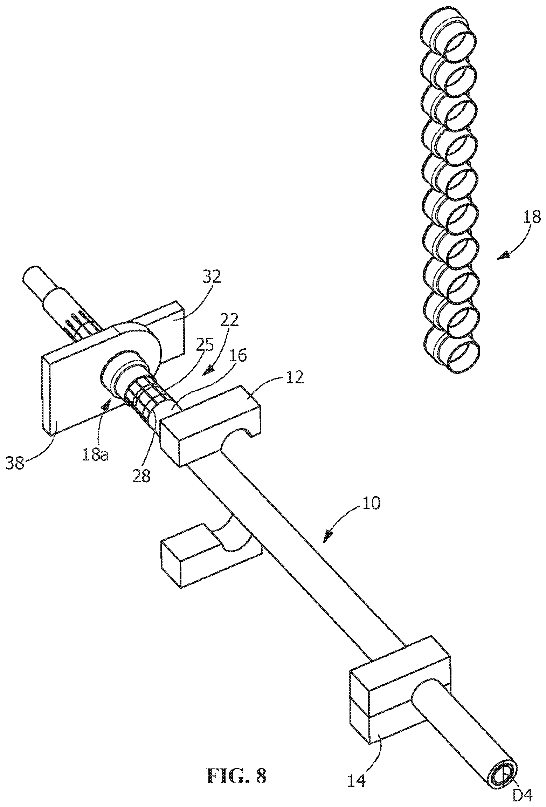

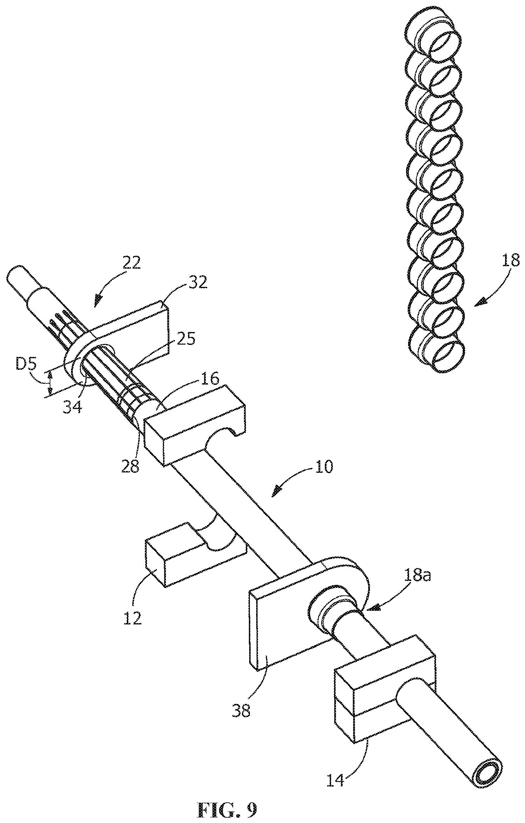

In addition, as shown in FIGS. 7 and 8, a collet closer device 32 which is positioned on the collet mechanism 22 is moved toward the free end 28 of the collet mechanism 22 to move the free end 28 of the collet mechanism 22 from the second position (FIGS. 3 and 7) to the first position (FIGS. 2 and 8). As this occurs, a component positioning device 38, which is provided proximate the collet closer device 32 is also moved toward the end 16 of the cable 10. As shown in FIG. 9, the collet closer device 32 has an opening 34 with a diameter D5 which is approximately equal to the outside diameter D1 of the free end 28 of the collet mechanism 22 when the collet mechanism 22 is in the first position. Therefore, as the collet closer device 32 is moved toward the free end 28 of the collet mechanism 22, the opening 34 of the collet closer device 32 engages the free end 28 of the collet mechanism 22, moving or closing the free end 28 of the collet mechanism 22 back toward the first position.

In the position shown in FIG. 8, the free end 28 of the collet mechanism 22 is position in engagement with the end 16 of the cable 10 to secure the collet mechanism 22 to the cable 10. The clamping force exerted by the resilient legs 25 of the collet mechanism 22 is sufficient to retain the collet mechanism 22 in position. The clamping force is also sufficient to form the free end 16 of the cable 10, whereby if the free end 16 of the cable 10 is not round or the circumference of the free end 16 of the cable 10 has been deformed, the free end 28 of the collet mechanism 22 interacts with the free end 16 of the cable 10 such that the free end 16 of the cable 10 will conform to the shape of the inner surfaces 33 of the resilient legs 25 at the free end 28 of the collet mechanism 22.

In the position shown in FIG. 8, the free end 28 of the collet mechanism 22 frictionally engages or grips the free end 16 of the cable 10 to secure the collet mechanism 22 to the cable 10. As the free end 28 of the collet mechanism 22 grips or compresses the free end 16 of the cable 10, a smooth transition is provided between the free end 28 of the collet mechanism 22 and the cable 10.

With the collet mechanism 22 securely positioned on the cable 10, the first clamp 12 is opened, as shown in FIG. 8. With the first clamp 12 open and the collet mechanism 22 securely positioned on the cable 10, the component positioning device 38 is moved toward the free end 28 of the collet mechanism 22 and the cable 10. As shown in FIGS. 8 and 9, the movement of the component positioning device 38 causes the component positioning device 38 to engage and move the component 18a from the collet mechanism 22 to a programmed position on the cable 10. As a smooth transition with no shoulder or obstruction is provided between the collet mechanism 22 and the cable 10, the component 18a may be freely moved from the collet mechanism 22 to the cable 10 is facilitate by the smooth transition 36 between the collet mechanism 22 and the cable 10.

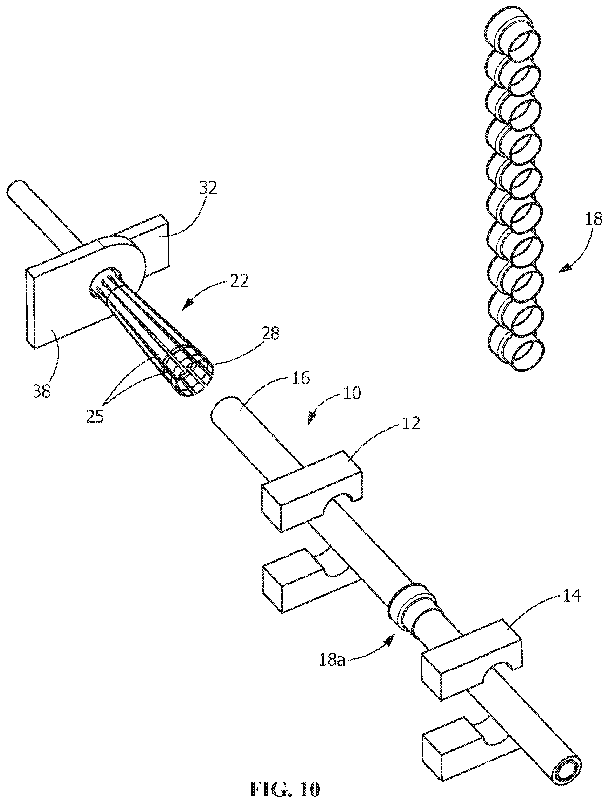

With the component 18a properly positioned, the component positioning device 38 and the collet closer device 32 are retracted to their original position, as shown in FIG. 10. With the component positioning device 38 and the collet closer device 32 properly retracted, the free end 28 of the collet mechanism 22 is again moved to the second position, in the manner previously described. With the free end 28 of the collet mechanism 22 moved to the second position, the free end 28 of the collet mechanism 22 is retracted or removed from the free end 16 of the cable 10 and the second clamp 14 is opened, thereby allowing the removal of the assembled cable 10.

If components are to be inserted on additional cables, the collet mechanism 22 is returned to the position shown in FIG. 4 and an additional cable 10 is moved into position. The process or method described above is then repeated as needed.

The process or method may be performed manually or semiautomatically with an operator controlling the steps, or may be performed fully automatically be a machine with a controller programmed to perform the steps.

While the above process or method is described using one component 18, the process or method may be used to apply multiple components simultaneously. Alternatively, multiple components may be applied in series to a cable 10, allowing each component 18 to be moved independently to its programmed position. This may be done using one collet mechanism 22 which obtains components 18 from multiple magazines, or by using multiple collets, each obtaining components 18 from individual magazines.

## Claims

1. A method of positioning a component (18) on a cable (10), the method comprising:
moving a collet (22) comprising resilient legs (25) into position within the component (18), the collet (22) being in a closed position in which the resilient legs (25) are not expanded;
moving a camming tool (41) provided inside an opening (30) of the collet (22) to cause the resilient legs (25) to move to an expanded position in which an outer diameter of a free end (14) of the collet (22) is greater than an inner diameter of the component (18);
engaging the component (18) with the collet (22);
moving the collet (22) with the component (18) positioned thereon into alignment with an end of the cable (10);
securing the collet (22) to the end of the cable (10);
moving the component (18) from the collet (22) to the cable (10);
removing the collet (22) from the end of the cable (10).

2. The method as recited in claim 1, wherein the collet (22) is maintained in the expanded position as the collet (22) is moved into alignment with the cable (10), wherein an inside diameter of the free end (14) of the collet (22) is greater than an outside diameter of the cable (10).

3. The method as recited in claim 2, wherein a collet closing mechanism comprising a collet closer device (32) which is positioned on the collet (22) is moved toward the free end (14) of the collet (22) to move the free end (14) of the collet (22) toward the closed position, wherein the free end (14) of the collet (22) is moved into engagement with the end of the cable (10) to secure the collet (22) to the cable (10).

4. The method as recited in claim 3, wherein as the free end (14) of the collet (22) is moved into engagement with the end of the cable (10) and the collet (22) is secured to the end of the cable (10), the collet (22) compresses the free end (14) of the cable (10), causing the end of the cable (10) to conform to a circular shape of a conductor receiving opening (30) of the collet (22).

5. The method as recited in claim 4, wherein the respective component (18) and the wire are positioned proximate each other in a vertical relationship.

6. The method as recited in claim 4, wherein the respective component (18) and the wire are positioned proximate each other in a horizontal relationship.

7. The method as recited in claim 4, comprising:
engaging additional components (18) with the collet (22);
moving the collet (22) with the component (18) and the additional components (18) positioned thereon into alignment with an end of the cable (10);
securing the collet (22) to the end of the cable (10);
moving the component (18) and the additional components (18) from the collet (22) to the cable (10);
removing the collet (22) from the end of the cable (10).

8. The method as recited in claim 6, wherein the collet (22) has resilient legs (25) which slots (37) provided therebetween, the resilient legs (25) are in an unstressed position in the closed position and in a resiliently stressed position in the expanded position.

9. A collet mechanism (22) for inserting components on a cable (10), the collet mechanism (22) comprising:
an expandable portion (23) having an opening (30) which extends along a longitudinal axis (24) of the collet mechanism (22), resilient legs (25) provided on the expandable portion (23), the resilient legs (25) having fixed ends (27) and free ends (29), slots (37) provided between the resilient legs (25), the slots (37) separate the resilient legs (25) to allow each resilient leg (25) to act independently of the other resilient legs (25);
the expandable portion (23) being movable between a closed position, in which the resilient legs (25) are not expanded and have a first outside diameter, and an expanded position, in which the resilient legs (25) have a second outside diameter, the second diameter being greater than the first diameter; and **characterised by**
a camming tool (41) provided in the opening (30) of the collet mechanism (22) that is configured to be moved in order to move the collet (22) from the closed position to the expanded position.

10. The collet mechanism (22) as recited in claim 9, wherein the resilient legs (25) have inner surfaces (33) which define the opening (30), the inner surfaces (33) have first camming surfaces provide thereon, the first camming surfaces are provided between the fixed ends (27) and the free ends (29).

## Patentansprüche

1. Verfahren zum Positionieren einer Komponente (18) auf einem Kabel (10), wobei das Verfahren Folgendes beinhaltet:
Bewegen einer Klemmhülse (22) mit elastischen Schenkeln (25) in Position innerhalb der Komponente (18), wobei die Klemmhülse (22) in einer geschlossenen Position ist, in der die elastischen Schenkel (25) nicht gespreizt sind;
Bewegen eines innerhalb einer Öffnung (30) der Klemmhülse (22) vorgesehenen Camming-Werkzeugs (41), um zu bewirken, dass sich die elastischen Schenkel (25) in eine gespreizte Position bewegen, in der ein Außendurchmesser eines freien Endes (14) der Klemmhülse (22) größer ist als ein Innendurchmesser der Komponente (18);
Ineingriffbringen der Komponente (18) mit der Klemmhülse (22);
Bewegen der Klemmhülse (22) mit der darauf positionierten Komponente (18) in Ausrichtung mit einem Ende des Kabels (10);
Befestigen der Klemmhülse (22) am Ende des Kabels (10);
Bewegen der Komponente (18) von der Klemmhülse (22) zum Kabel (10);
Entfernen der Klemmhülse (22) vom Ende des Kabels (10).

2. Verfahren nach Anspruch 1, wobei die Klemmhülse (22) in der gespreizten Position gehalten wird, während die Klemmhülse (22) in Ausrichtung mit dem Kabel (10) bewegt wird, wobei ein Innendurchmesser des freien Endes (14) der Klemmhülse (22) größer ist als ein Außendurchmesser des Kabels (10).

3. Verfahren nach Anspruch 2, wobei ein Klemmhülsenschließmechanismus, der eine an der Klemmhülse (22) positionierte Klemmhülsenschließvorrichtung (32) umfasst, in Richtung des freien Endes (14) der Klemmhülse (22) bewegt wird, um das freie Ende (14) der Klemmhülse (22) in Richtung der geschlossenen Position zu bewegen, wobei das freie Ende (14) der Klemmhülse (22) in Eingriff mit dem Ende des Kabels (10) bewegt wird, um die Klemmhülse (22) am Kabel (10) zu befestigen.

4. Verfahren nach Anspruch 3, wobei die Klemmhülse (22), während das freie Ende (14) der Klemmhülse (22) in Eingriff mit dem Ende des Kabels (10) bewegt und die Klemmhülse (22) am Ende des Kabels (10) befestigt wird, das freie Ende (14) des Kabels (10) zusammendrückt, wodurch sich das Ende des Kabels (10) an die Kreisform einer Leiteraufnahmeöffnung (30) der Klemmhülse (22) anpasst.

5. Verfahren nach Anspruch 4, wobei die jeweilige Komponente (18) und der Draht in vertikaler Ausrichtung nahe beieinander positioniert sind.

6. Verfahren nach Anspruch 4, wobei die jeweilige Komponente (18) und der Draht in horizontaler Ausrichtung nahe beieinander positioniert sind.

7. Verfahren nach Anspruch 4, das Folgendes beinhaltet:
Ineingriffbringen weiterer Komponenten (18) mit der Klemmhülse (22);
Bewegen der Klemmhülse (22) mit der/n darauf positionierten Komponente (18) und weiteren Komponenten (18) in Ausrichtung mit einem Ende des Kabels (10);
Befestigen der Klemmhülse (22) am Ende des Kabels (10);
Bewegen der Komponente (18) und der weiteren Komponenten (18) von der Klemmhülse (22) zum Kabel (10);
Entfernen der Klemmhülse (22) vom Ende des Kabels (10).

8. Verfahren nach Anspruch 6, wobei die Klemmhülse (22) elastische Schenkel (25) mit Schlitzen (37) dazwischen aufweist, wobei sich die elastischen Schenkel (25) in der geschlossenen Position in einer unbelasteten Position und in der gespreizten Position in einer elastisch belasteten Position befinden.

9. Klemmhülsenmechanismus (22) zum Einsetzen von Komponenten auf ein Kabel (10), wobei der Klemmhülsenmechanismus (22) Folgendes umfasst:
einen spreizbaren Abschnitt (23) mit einer Öffnung (30), die sich entlang einer Längsachse (24) des Klemmhülsenmechanismus (22) erstreckt; an dem spreizbaren Abschnitt (23) vorgesehene elastische Schenkel (25), wobei die elastischen Schenkel (25) feste Enden (27) und freie Enden (29) haben, zwischen den elastischen Schenkeln (25) vorgesehene Schlitze (37), wobei die Schlitze (37) die elastischen Schenkel (25) voneinander trennen, damit jeder elastische Schenkel (25) unabhängig von den anderen elastischen Schenkeln (25) wirken kann;
wobei der spreizbare Abschnitt (23) zwischen einer geschlossenen Position, in der die elastischen Schenkel (25) nicht gespreizt sind und einen ersten Außendurchmesser haben, und einer gespreizten Position bewegbar ist, in der die elastischen Schenkel (25) einen zweiten Außendurchmesser haben, wobei der zweite Durchmesser größer ist als der erste Durchmesser; und
**gekennzeichnet durch** ein in der Öffnung (30) des Klemmhülsenmechanismus (22) vorgesehenes Camming-Werkzeug (41), das konfiguriert ist, um bewegt zu werden, um die Klemmhülse (22) von der geschlossenen Position in die gespreizte Position zu bewegen.

10. Klemmhülsenmechanismus (22) nach Anspruch 9, wobei die elastischen Schenkel (25) die Öffnung (30) definierende Innenflächen (33) aufweisen, wobei auf den Innenflächen (33) erste Nockenflächen vorgesehen sind, wobei die ersten Nockenflächen zwischen den festen Enden (27) und den freien Enden (29) vorgesehen sind.

## Revendications

1. Procédé de positionnement d'un composant (18) sur un câble (10), le procédé comprenant :
le fait de déplacer un collet (22), comprenant des jambes élastiques (25), pour une mise en position au sein du composant (18), le collet (22) étant en position fermée dans laquelle les jambes élastiques (25) ne sont pas expansées ;
le fait de déplacer un outil à effet de came (41) prévu à l'intérieur d'une ouverture (30) du collet (22) pour amener les jambes élastiques (25) à se déplacer jusqu'à une position expansée dans laquelle un diamètre externe d'une extrémité libre (14) du collet (22) est plus grand qu'un diamètre interne du composant (18) ;
le fait de mettre en prise le composant (18) avec le collet (22) ;
le fait de déplacer le collet (22) avec le composant (18) positionné sur celui-ci en alignement avec une extrémité du câble (10) ;
le fait de fixer le collet (22) sur l'extrémité du câble (10) ;
le fait de déplacer le composant (18) à partir du collet (22) jusqu'au câble (10) ;
le fait de retirer le collet (22) de l'extrémité du câble (10).

2. Procédé tel qu'énoncé dans la revendication 1, dans lequel le collet (22) est maintenu dans la position expansée au fur et à mesure que le collet (22) est déplacé pour une mise en alignement avec le câble (10), dans lequel un diamètre intérieur de l'extrémité libre (14) du collet (22) est plus grand qu'un diamètre extérieur du câble (10).

3. Procédé tel qu'énoncé dans la revendication 2, dans lequel un mécanisme de fermeture de collet comprenant un dispositif de fermeture de collet (32), qui est positionné sur le collet (22), est déplacé vers l'extrémité libre (14) du collet (22) afin de déplacer l'extrémité libre (14) du collet (22) vers la position fermée, dans lequel l'extrémité libre (14) du collet (22) est déplacée pour une mise en prise avec l'extrémité du câble (10) afin de fixer le collet (22) sur le câble (10).

4. Procédé tel qu'énoncé dans la revendication 3, dans lequel au fur et à mesure que l'extrémité libre (14) du collet (22) est déplacée pour une mise en prise avec l'extrémité du câble (10) et que le collet (22) est fixé sur l'extrémité du câble (10), le collet (22) comprime l'extrémité libre (14) du câble (10), ce qui amène l'extrémité du câble (10) à s'adapter à une forme circulaire d'une ouverture de réception de conducteur (30) du collet (22).

5. Procédé tel qu'énoncé dans la revendication 4, dans lequel le composant respectif (18) et le fil sont positionnés à proximité l'un de l'autre dans une relation verticale.

6. Procédé tel qu'énoncé dans la revendication 4, dans lequel le composant respectif (18) et le fil sont positionnés à proximité l'un de l'autre dans une relation horizontale.

7. Procédé tel qu'énoncé dans la revendication 4, comprenant :
le fait de mettre en prise des composants additionnels (18) avec le collet (22) ;
le fait de déplacer le collet (22) avec le composant (18) et les composants additionnels (18) positionnés sur celui-ci pour une mise en alignement avec une extrémité du câble (10) ;
le fait de fixer le collet (22) sur l'extrémité du câble (10) ;
le fait de déplacer le composant (18) et les composants additionnels (18) à partir du collet (22) jusqu'au câble (10) ;
le fait de retirer le collet (22) de l'extrémité du câble (10).

8. Procédé tel qu'énoncé dans la revendication 6, dans lequel le collet (22) a des jambes élastiques (25) avec des fentes (37) prévues entre celles-ci, les jambes élastiques (25) étant dans une position non sollicitée dans la position fermée et dans une position élastiquement sollicitée dans la position expansée.

9. Mécanisme à collet (22) pour insérer des composants sur un câble (10), le mécanisme à collet (22) comprenant :
une portion expansible (23) ayant une ouverture (30) qui s'étend le long d'un axe longitudinal (24) du mécanisme à collet (22), des jambes élastiques (25) prévues sur la portion expansible (23), les jambes élastiques (25) ayant des extrémités fixes (27) et des extrémités libres (29), des fentes (37) prévues entre les jambes élastiques (25), les fentes (37) séparant les jambes élastiques (25) pour permettre à chaque jambe élastique (25) d'agir indépendamment par rapport aux autres jambes élastiques (25) ;
la portion expansible (23) pouvant être déplacée entre une position fermée, dans laquelle les jambes élastiques (25) ne sont pas expansées et ont un premier diamètre extérieur, et une position expansée, dans laquelle les jambes élastiques (25) ont un deuxième diamètre extérieur, le deuxième diamètre étant plus grand que le premier diamètre ; et
**caractérisé par**
un outil à effet de came (41) prévu dans l'ouverture (30) du mécanisme à collet (22) qui est configuré pour être déplacé afin de déplacer le collet (22) à partir de la position fermée jusqu'à la position expansée.

10. Mécanisme à collet (22) tel qu'énoncé dans la revendication 9, dans lequel les jambes élastiques (25) ont des surfaces internes (33) qui définissent l'ouverture (30), les surfaces internes (33) ayant des premières surfaces à effet de came prévues sur celles-ci, les premières surfaces à effet de came étant prévues entre les extrémités fixes (27) et les extrémités libres (29).
